# EUROPÄISCHE PATENTSCHRIFT

(11) **EP 0 877 173 B1**
(45) Veröffentlichungstag und Bekanntmachung des Hinweises auf die Patenterteilung: **18.09.2002**
(21) Anmeldenummer: 98107627.6
(22) Anmeldetag: 27.04.1998
(51) Int. Cl.: F16C 3/02, B63H 23/34

(54) **Kraftübertragungswelle aus faserverstärktem Kunststoff**
Power transmission fibre-reinforced shaft
Arbre de transmission en plastic renforcé par des fibres

(30) Priorität: 09.05.1997 DE 19719641
(43) Veröffentlichungstag der Anmeldung: 11.11.1998
(73) Patentinhaber: Centa-Antriebe Kirschey GmbH, 42781 Haan (DE)
(72) Erfinder: Kirschey, Gerhard, Dipl.-Ing., 42329 Wuppertal (DE)
(74) Vertreter: Patentanwälte Ostriga & Sonnet

(56) Entgegenhaltungen:
- EP-A- 0 046 869
- DE-C- 739 603
- FR-A- 746 935
- GB-A- 2 017 567
- GB-A- 2 187 819
- US-A- 1 422 697
- US-A- 5 009 123
- SOVIET PATENTS ABSTRACTS Section PQ, Week 9409 20.April 1994 Derwent Publications Ltd., London, GB; Class Q24, AN 94-072854 XP002075418 & RU 2 001 827 C (SPECIAL MECH ENG RES INST ) , 30.Oktober 1993
- HOISCHEN: "Technisches Zeichnen", 1984, GIRADET, ESSEN
- G. NIEMANN: "Maschinenelmente", 1981, SPRINGER VERLAG, BERLIN, HEIDELBERG

## Beschreibung

Die Erfindung bezieht sich auf eine Kraftübertragungswelle nach dem Oberbegriff des Anspruchs 1.

Durch druckschriftlich nicht näher belegbare offenkundige Benutzung ist eine derartige Kraftübertragungswelle als Antriebswelle für Schiffsantriebe bekannt. Zur Drehmomentübertragung zwischen der Hohlwelle und den an ihren Enden angebrachten Anschlußstücken dient eine Vielzahl von radial sowie mit gleichmäßigen Umfangsabständen angeordneten Paßbolzen, deren Schäfte jeweils das Rohrende sowie den zugeordneten Hülsenabschnitt des Anschlußstücks durchgreifen und in Segmente eingeschraubt sind, die innen im Hülsenabschnitt angeordnet sind.

Diese recht aufwendige Bauweise setzt paßgenau zusammenwirkende zylindrische Bohrungen und Bolzen voraus, um die Verbindung spielfrei zu halten, was für den einwandfreien Betrieb einer Antriebswelle eine unabdingbare Voraussetzung ist. Die aufgrund der Schraubverspannung der jeweiligen Paßbolzen über deren Köpfe auf den Außenmantel der Hohlwelle einwirkenden erheblichen Kräfte können zu lokalen Beeinträchtigungen und Beschädigungen des Rohrmantels führen, sofern nicht besondere und aufwendige Gegenmaßnahmen ergriffen werden, beispielsweise durch Anordnung von radialen Paßhülsen, an deren nach außen weisenden Stirnflächen sich die Köpfe der Paßbolzen abstützen könnten.

Der vorliegenden Erfindung liegt insbesondere die Aufgabe zugrunde, eine Kraftübertragungswelle der vorausgesetzten Art vorzuschlagen, die mit einfacheren als den bekannten Mitteln eine spielfreie Verbindung zwischen Hohlwelle und Anschlußkörper garantiert, die in die Struktur des faserverstärkten Rohres nur minimal eingreift und deshalb dessen Festigkeit praktisch nicht beeinträchtigt.

Die Erfindung löst diese Aufgabe mit den Merkmalen des Anspruchs 1 und ist dementsprechend dadurch gekennzeichnet, daß die Bolzen aus Konusstiften bestehen, die radial von außen her in die zuvor entsprechend konisch ausgearbeiteten Bohrungen von Hülsenabschnitt und Rohr eingetrieben und in ihrer Endlage durch wenigstens ein Sicherungsmittel festgehalten sind.

Aufgrund der Konizität der Konusstifte und der entsprechenden Konizität der die Stifte aufnehmenden Bohrungen von Hülsenabschnitt und Rohr ergibt sich zum einen der Vorteil, daß die Verbindung beschädigungsfrei zu montieren ist. Eine spielfreie Verbindung ergibt sich dabei durch das Eintreiben der Konusstifte von selbst, wohingegen eine zylindrische spielfreie Verbindung nur mit Hilfe aufwendiger Paßsitze erreichbar ist. Demgegenüber können die konischen Bohrungen im Hülsenabschnitt und im Rohrende leicht durch konisches Aufreiben einer zylindrischen Bohrung hergestellt werden.

Beim Eintreiben der Konusstifte in die entsprechend konischen Bohrungen ist es ausgeschlossen, daß die Lochlaibung beschädigt werden könnte. Die axial gerichteten Eintreibkräfte wirken vorteilhaft in Radialrichtung auf die Lochlaibung, also als Druckkräfte ein, die die Struktur insbesondere des faserverstärkten Rohres nicht verletzen können.

Eine besondere Sicherung der Konusstifte in ihrer Endlage soll unter allen Umständen vermeiden, daß die Konusstifte unter Einfluß der betriebsmäßigen Zentrifugalkräfte aus ihrer bestimmungsgemäßen Montageposition gerissen werden könnten.

Aus der dem Oberbegriff des Aurpruchs 1 entsprechenden EP-A-0046869 ist ein Anschluß zur Übertragung von Drehmomenten in torsionsweiche Rohre bekannt. Hier ist grundsätzlich eine Gummischicht oder eine Klebeschicht vorgesehen, die das Rohr mit dem Flansch verbindet. Um Schubspannungsspitzen zu verringern, wird vorgeschlagen, in Kombination mit der zwangsläufig vorhandenen Gummischicht oder Klebeschicht zusätzliche Bolzen, Nieten oder Schrauben zur Erhöhung der Festigkeit vorzusehen.

Aus der RU 2 001 827 C läßt sich eine kompliziert aufgebaute mehrteilige Verbindung entnehmen, die Bolzen verwendet. Es wird darauf hingewiesen, daß konisch geformte Bolzen mit einem Gewinde versehen sind.

Aus der US-A-1422697 ist es bei einem Filmprojektor bekannt, zur Befestigung eines Zahnrades an einer Welle ein Bolzenelement einzuschrauben.

Weitere Ausgestaltungen der Erfindung sowie zweckmäßige Weiterbildungen sind Gegenstand der Unteransprüche. Sie verstehen sich im übrigen am besten aus der nachfolgenden Beschreibung anhand zweier in den Zeichnungen dargestellter Ausführungsbeispiele. In den Zeichnungen zeigen:
- Fig. 1: einen schematischen Halb-Längsschnitt durch den Verbindungsbereich zwischen einer Hohlwelle und einem Anschlußstück entsprechend einer ersten Ausführungsform,
- Fig. 2: die einzelnen Elemente aus Fig. 1 in einer Explosionsdarstellung und
- Fig. 3: eine der Fig. 1 entsprechende Schnittdarstellung einer zweiten Ausführungsform.

Eine in ihrer Gesamtheit mit 10 bezeichnete Kraftübertragungswelle umfaßt ein aus faserverstärktem, insbesondere kohlefaserverstärktem Kunststoff - CFK - bestehendes Rohr 11 und jeweils ein an jedem Rohrende 11a befestigtes Anschlußstück 12. In den Figuren ist nur jeweils ein Rohrende 11a mit einem Anschlußstück 12 bezeichnet. Am anderen Rohrende kann ein gleichgestaltetes oder in der Form auch abweichendes zweites Anschlußstück vorgesehen sein.

Die Anschlußstücke dienen zum mittelbaren oder unmittelbaren Anschluß der Kraftübertragungswelle an antreibende und angetriebene Aggregate, wie z.B. Motorschwungrad, Getriebeflansch, Schiffsschraube od.dgl. Das Rohr 11 stellt dabei eine um die Längsmittel- oder Systemachse A rotierende Hohlwelle dar, deren Wandstärke in an sich bekannter Art und Weise im Bereich des Rohrendes 11a gegenüber dem sonstigen Rohr verstärkt ist.

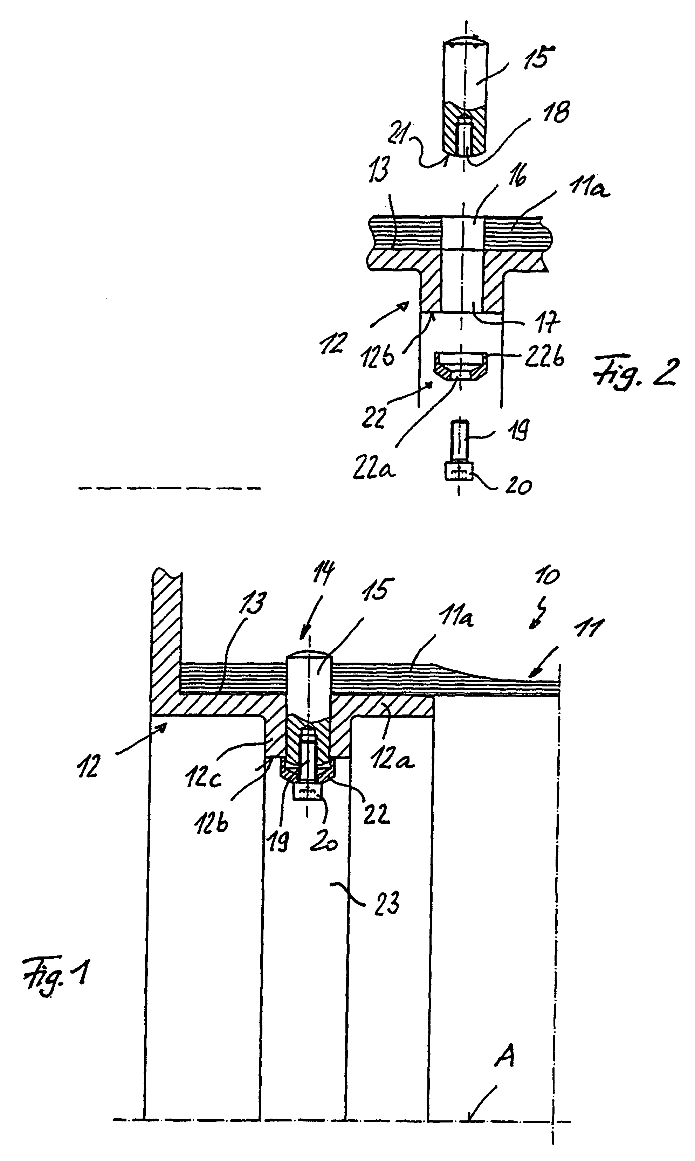

Das Anschlußstück 12 nach Fig. 1 weist einen zur Rotationsachse A konzentrischen Hülsenabschnitt 12a auf, der in das Rohrende 11a eingepaßt ist. Der Fügespalt 13 zwischen dem Rohrende 11a und dem Hülsenabschnitt 12a ist zweckmäßig so gestaltet, daß ein gut zentriertes Ineinandergreifen der miteinander zu kuppelnden Teile gewährleistet wird. Ein Preßsitz ist weder erforderlich noch in der Regel erwünscht. Der Fügespalt 13 kann, insbesondere zum Rohr hin, also bezüglich der Zeichnung nach rechts, geringfügig erweitert sein, um einen Klebstoff, z.B. ein flüssiges, aushärtbares Epoxydharz, aufzunehmen. Mit einer solchen Klebung kann eine zusätzliche Stabilität der drehfesten Verbindung erreicht werden.

Als wesentliche Elemente zur drehfesten Verbindung zwischen dem Rohr 11 und dem jeweiligen Anschlußstück 12 dienen radial angeordnete Bolzen 14, die entsprechend der Erfindung als Konusstifte 15 ausgebildet sind, die in vorzugsweise gleichmäßigen Abständen über den Umfang des Verbindungsbereichs an den Rohrenden 11a verteilt in einer Reihe oder auch mehreren Reihen angebracht sind.

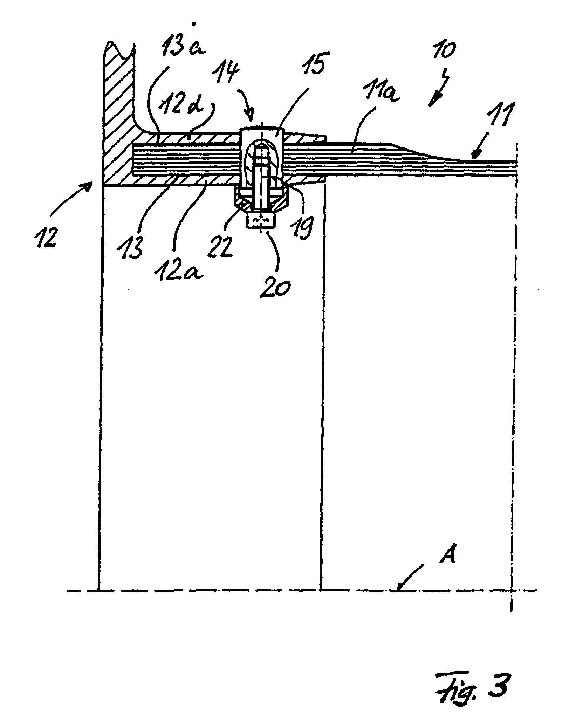

Die drehfeste Verbindung von Rohr 11 und Anschlußstück 12 mit Hilfe der Konusstifte 15 wird auf folgende Weise vorgenommen:
Unter Bezugnahme auf Fig. 1 und 2 werden zunächst das Rohrende 11a und das zugehörige Anschlußstück 12 durch Ineinanderstecken verbunden. Ist eine Klebung im Fügespalt 13 vorgesehen, werden die Teile zunächst miteinander verklebt und abgewartet, bis der Klebstoff ausgehärtet ist. Sodann werden das Rohrende 11a und der betreffende Hülsenabschnitt 12a des Anschlußstücks 12 radial durchbohrt, so daß sich fluchtende Bohrungsabschnitte 16 und 17 (Fig. 2) ergeben. Anschließend werden die Bohrungsabschnitte 16 und 17 gemeinsam konisch aufgerieben. Dabei weist die äußere Mündung der Bohrung 16 im Rohrende 11a den größten und die innere Mündung der Bohrung 17 den kleinsten Durchmesser auf. Die Konizität der Bohrungen entspricht der Konizität des Konusstiftes 15 und kann vorteilhafterweise z.B. etwa 1:50 betragen. In jede konische Bohrung 16, 17 wird nunmehr von außen ein vorzugsweise aus Stahl bestehender Konusstift 15 mit geschliffenem Konusmantel eingepreßt.

Da Kraftübertragungswellen insbesondere bei hohen Drehzahlen beachtlichen Fliehkräften unterworfen sind, sieht die Erfindung eine besondere Sicherung der Konusstifte 15 gegen radiales Herausschleudern vor. Beim dargestellten Ausführungsbeispiel ist hierzu der Konusstift 15 an seinem im Durchmesser kleineren Ende mit einer Gewindebohrung 18 versehen, in die ein Gewindeschaft 19 einer Sicherungsschraube 20 von der Innenseite des Systems her eingreift. Da aufgrund der unvermeidlichen Toleranzen die innere Stirn 21 des Konusstiftes 15 unterschiedlich weit in den Innenraum eingreifen wird, ist zur Gewährleistung einer sicheren Verspannung des Konusstiftes 15 gegenüber dem Hülsenabschnitt 12a des Anschlußstücks 12 zwischen dem Kopf der Schraube 20 und der Innenfläche 12b des Hülsenabschnitts 12 ein Distanzstück 22 eingespannt.

Das Distanzstück 22 hat eine etwa topfartige Form mit einer Durchgriffsöffnung 22a für den Schaft 19 der Schraube 20 und einem Topfrand 22b. Dessen Innendurchmesser ist größer als der Außendurchmesser des verjüngten inneren Endes des Konusstiftes 15, das deshalb in das Innere des Topfes eintreten kann, wie es beispielsweise in Fig. 1 gezeigt ist. Auf diese Weise gestattet das besonders gestaltete Distanzstück 22 unabhängig von den auftretenden unvermeidlichen Toleranzen die feste Sicherung des Konusstiftes 15.

Was das Sicherungsmittel für den Konusstift 15 betrifft, könnte man es auch unmittelbar am Konusstift selbst ausbilden, etwa indem das verjüngte Ende des Konusstiftes 15 nietfähig ausgebildet ist. Dies könnte mittels einer bezüglich des Stiftes axialen Aufbohrung erreicht werden, die einen durch Umbördeln vernietbaren Stiftrand schafft.

Auch kann der Konusstift 15 an seinem im Durchmesser verjüngten Ende mit einem Gewindeschaft versehen sein, und das Sicherungsmittel kann aus einem damit verschraubbaren und sich mindestens mittelbar an der Innenseite des Hülsenabschnitts abstützenden Mutterkörper bestehen.

Es ist grundsätzlich möglich, in den Fügebereich zwischen Konusstift 15 und den Bohrungsabschnitten 16 und 17 einen Klebstoff, z.B. ein aushärtbares Epoxydharz, einzugeben. Einerseits erleichtert dies das Gleiten des Konusstiftes 15 beim Eintreiben in die Bohrungsanordnung 16, 17 und hat andererseits den Vorteil, daß der Klebstoff Poren oder andere Unebenheiten perfekt nivellieren kann, die im Fügebereich insbesondere im Bohrungsabschnitt 16 des Rohrendes 11a vorhanden sein könnten. Zudem trägt der Klebstoff zusätzlich zur festhaftenden Verbindung des konusstiftes 15 bei.

Beim Ausführungsbeispiel, welches in den Fig. 1 und 2 gezeigt ist, liegt eine sogenannte "einschnittige" Verbindung zwischen Rohrende 11a und einem einzigen Hülsenabschnitt 12a des Anschlußstücks 12 vor. Um dabei ein Verkippen oder eine sonstige unzulässige Querverlagerung oder Schrägstellung des Konusstiftes 15 zu verhindern, weist der Hülsenabschnitt 12a eine Verstärkung 12b in Form einer nach innen erhabenen umlaufenden Ringrippe 23 auf.

Das Ausführungsbeispiel der Fig. 3 unterscheidet sich hiervon im wesentlichen durch eine sogenannte "zweischnittige" Verbindung dergestalt, daß das verdickte Ende 11a des Rohres 11 sowohl innen als auch außen von jeweils einem Hülsenabschnitt 12a, 12d tangiert ist. Da hier der Konusstift 15 sowohl im Innern des Rohrendes 11a als auch auf dessen Außenseite jeweils einen Bohrungsabschnitt des Anschlußstücks 12 durchgreift, sind besondere stabilitätserhöhende Maßnahmen nicht erforderlich. Entsprechend kann auch der Konusstift 15 kürzer ausgeführt sein.

Auch bei dieser zweiten Ausführungsform können die Fügespalte 13 (innen) und 13a (außen) jeweils zumindest in einem axialen Bereich zur Klebespalten erweitert sein. Eine zweckmäßige Spaltweite liegt z.B. bei 0,1 mm, wobei es aus Festigkeitsgründen vorteilhaft ist, wenn sich der Klebespalt zum freien Ende des jeweiligen Hülsenabschnitts 12a, 12d hin geringfügig erweitert.

Die Konusstifte 15 weisen, wie die Figuren deutlich zeigen, vorzugsweise keinen über den Konusschaft radial vorstehenden Kopf auf, um in jedem Fall auszuschließen, daß ein solcher die Rohroberfläche in Mitleidenschaft ziehen könnte.

Dargestellt und bislang beschrieben wurden die als besonders vorteilhaft erkannten Merkmale der Erfindung. Gleichwohl sind Abwandlungen im Rahmen der Erfindung möglich. Dies betrifft beispielsweise die Sicherungsmittel für die Konusstifte 15. Hier könnte man auch daran denken, auf der Außenseite des Verbindungsbereichs eine Manschette anzubringen. Beim Ausführungsbeispiel nach Fig. 1 würde diese Manschette also auf der Außenseite des Rohrendes 11a und bei der Ausführung nach Fig. 3 auf der Außenfläche des Hülsenabschnitts 12d des Anschlußstücks 12 liegen und die Konusstifte gegen einen möglichen Austritt sichern.

## Patentansprüche

1. Kraftübertragungswelle (10) mit einem aus faserverstärktem Kunststoff bestehenden Rohr (11), an dessen Enden (11a) jeweils ein Anschlußstück (12) zur Drehmomentübertragung befestigt ist, welches wenigstens einen mit dem Ende (11a) des Rohres (11) steckverbindbaren Hülsenabschnitt (12a; 12d) aufweist und wobei im axialen Überdeckungsbereich von Hülsenabschnitt (12a; 12d) und Rohr (11) deren Wandungen radial durchsetzende Bolzen (14) zur Drehmomentübertragung angeordnet sind, **dadurch gekennzeichnet, daß** die Bolzen (14) aus Konusstiften (15) bestehen, die radial von außen her in die zuvor entsprechend konisch ausgearbeiteten Bohrungen (16, 17) von Rohr (11) und Hülsenabschnitt (12) eingetrieben und in ihrer Endlage durch wenigstens ein Sicherungsmittel festgehalten sind.

2. Kraftübertragungswelle nach Anspruch 1, **dadurch gekennzeichnet, daß** jedem Konusstift (15) ein eigenes Sicherungsmittel im Innern des Rohres zugeordnet ist.

3. Kraftübertragungswelle nach Anspruch 2, **dadurch gekennzeichnet, daß** das Sicherungsmittel gemeinsam mit einem am Konusstift (15) vorgesehenen Gewinde eine Spannverschraubung bildet.

4. Kraftübertragungswelle nach Anspruch 2 oder 3, **dadurch gekennzeichnet, daß** der Konusstift (15) ein sich zu seiner im Durchmesser kleineren Stirnseite (21) öffnendes Innengewinde (18) aufweist, mit dem eine Spannschraube (20) zusammenwirkt, zwischen deren Kopf und der Innenfläche des Hülsenabschnitts (12a) ein Distanzstück (22) eingespannt ist, das am Hülsenabschnitt (12a) mit einem etwa topförmigen Abschnitt (22b) anliegt, dessen Innendurchmesser größer ist als der Außendurchmesser der Kegelstiftstirn (21).

5. Kraftübertragungswelle nach Anspruch 2, **dadurch gekennzeichnet, daß** das Sicherungsmittel unmittelbar am Konusstift (15) selbst ausgebildet ist, indem das verjüngte Ende des Konusstiftes (15) nietfähig ausgebildet ist.

6. Kraftübertragungswelle nach Anspruch 2, **dadurch gekennzeichnet, daß** der Konusstift (15) an seinem im Durchmesser verjüngten Ende mit einem Gewindeschaft versehen ist und das Sicherungsmittel aus einem damit verschraubbaren und sich mindestens mittelbar an der Innenseite des Hülsenabschnitts (12a) abstützenden Mutterkörper besteht.

7. Kraftübertragungswelle nach Anspruch 1, **dadurch gekennzeichnet, daß** das Sicherungsmittel eine auf dem Hülsenabschnitt (12d) oder dem Rohrende (11a) befestigte Manschette ist.

8. Kraftübertragungswelle nach Anspruch 1 oder einem der darauf folgenden, **dadurch gekennzeichnet, daß** das Anschlußstück (12) in konzentrischer Anordnung zwei Hülsenabschnitte (12a, 12d) aufweist, zwischen denen das Ende (11a) des Rohres (11) aufgenommen ist.

9. Kraftübertragungswelle nach Anspruch 1 oder einem der darauf folgenden, **dadurch gekennzeichnet, daß** das Anschlußstück (12) einen in das Ende (11a) des Rohres (11) eintauchenden Hülsenabschnitt (12a) aufweist, der im Anordnungsbereich der Konusstifte (15) eine Materialverstärkung (12c) insbesondere in Form einer umlaufenden Innenrippe (23) aufweist.

10. Kraftübertragungswelle nach Anspruch 1 oder einem der darauf folgenden, **dadurch gekennzeichnet, daß** die Fügespalte (13; 13a) zwischen Hülsenabschnitt (12a, 12d) und Rohrende (11a) zumindest bereichsweise zur Aufnahme von Klebstoff ausgebildet sind.

11. Kraftübertragungswelle nach Anspruch 1 oder einem der darauf folgenden, **dadurch gekennzeichnet, daß** der Konusstift (15) unter Vermittlung eines Klebstoffs in die konischen Bohrungen (16, 17) von Rohrende (11a) und Hülsenabschnitt (12a, 12d) eingesetzt ist.

## Claims

1. Power transmission shaft (10) with a tube (11) composed of fibre-reinforced plastic, fastened to each of the ends (11a) of which is a connecting piece (12) for the torque transmission, which has at least one sleeve section (12a; 12d) connectable to the end (11a) of the tube (11) by pushing in and in the axial overlapping region of sleeve section (12a; 12d) and tube (11) there being arranged bolts (14), passing radially through their walls, for the torque transmission, **characterised in that** the bolts (14) consist of tapered pins (15) which are driven radially from outside into the bores (16, 17), previously formed with a corresponding taper, of tube (11) and sleeve section (12) and are firmly held in their final position by at least one securing means.

2. Power transmission shaft according to Claim 1, **characterised in that** each tapered pin (15) is assigned its own securing means in the inside of the tube.

3. Power transmission shaft according to Claim 2, **characterised in that** the securing means forms a clamping screw connection together with a thread provided on the tapered pin (15).

4. Power transmission shaft according to Claim 2 or 3, **characterised in that** the tapered pin (15) has an internal thread (18) which opens on its smaller-diameter end face (21) and with which there cooperates a clamping screw (20), between the head of which and the inner surface of the sleeve section (12a) there is clamped a distance piece (22) which bears against the sleeve section (12a) by way of an approximately pot-shaped section (22b), the inside diameter of which is larger than the outside diameter of the tapered-pin end (21).

5. Power transmission shaft according to Claim 2, **characterised in that** the securing means is formed directly on the tapered pin (15) itself by the tapered end of the tapered pin (15) being designed to be capable of riveting.

6. Power transmission shaft according to Claim 2, **characterised in that** the tapered pin (15) is provided with a threaded shank at its reduced-diameter end and the securing means consists of a nut body which can be screwed thereto and is supported at least indirectly on the inside of the sleeve section (12a).

7. Power transmission shaft according to Claim 1, **characterised in that** the securing means is a collar fastened on the sleeve section (12d) or the tube end (11a).

8. Power transmission shaft according to Claim 1 or one of the subsequent claims, **characterised in that** the connecting piece (12) has two concentrically arranged sleeve sections (12a, 12d), between which the end (11a) of the tube (11) is received.

9. Power transmission shaft according to Claim 1 or one of the subsequent claims, **characterised in that** the connecting piece (12) has a sleeve section (12a) reaching into the end (11a) of the tube (11) and, in the region in which the tapered pins (15) are arranged, having a material reinforcement (12c) in particular in the form of an inner rib (23) running all the way round.

10. Power transmission shaft according to Claim 1 or one of the subsequent claims, **characterised in that** the joining gaps (13; 13a) between sleeve section (12a, 12d) and tube end (11a) are designed, at least in certain regions, to receive adhesive.

11. Power transmission shaft according to Claim 1 or one of the subsequent claims, **characterised in that** the tapered pin (15) is inserted into the tapered bores (16, 17) of tube end (11a) and sleeve section (12a, 12d) through the agency of an adhesive.

## Revendications

1. Arbre de transmission de force (10), comportant un tube (11) formé en matière synthétique renforcée par des fibres, tube à chaque extrémité (11a) desquelles est fixée une pièce de raccordement (12) pour assurer la transmission d'un couple, qui présente au moins un tronçon de manchon (12a ; 12d) pouvant être relié par emboîtement avec l'extrémité (11a) du tube (11) et, dans la. zone de recouvrement axiale entre le tronçon de manchon (12a ; 12d) et le tube (11), étant disposé, pour assurer la transmission d'un couple, des boulons (14) traversant radialement ses parois, **caractérisé en ce que** les boulons (14) sont formés de goupilles coniques (15) enfoncées radialement depuis l'extérieur dans les perçages (16, 17), usinés préalablement à une forme conique correspondante, du tube (11) et du tronçon de manchon (12), et fixées à leur position finale à l'aide d'au moins un moyen de sécurité.

2. Arbre de transmission de force selon la revendication 1, **caractérisé en ce qu'**un moyen de sécurité propre est associé à chaque goupille conique (15) à l'intérieur du tube.

3. Arbre de transmission de force selon la revendication 2, **caractérisé en ce que** le moyen de sécurité forme, conjointement avec un filetage prévu sur la goupille conique (15), une liaison de serrage.

4. Arbre de transmission de force selon la revendication 2 ou 3, **caractérisé en ce que** la goupille conique (15) présente un filetage intérieur (18) débouchant sur sa face frontale (21) de petit diamètre, filetage intérieur avec lequel coopère une vis de serrage (20), entre la tête de laquelle et la surface intérieure du tronçon de manchon (12a) est enserrée une pièce d'espacement (22), appuyant sur le tronçon de manchon (12a) par un tronçon (22b) à peu près en forme de pot, dont le diamètre intérieur est supérieur au diamètre extérieur du bout (21) de la goupille conique.

5. Arbre de transmission de force selon la revendication 2, **caractérisé en ce que** le moyen de sécurité est réalisé directement sur la goupille conique (15) elle-même, par le fait que l'extrémité effilée de la goupille conique (15) est configurée pour pouvoir faire office de rivet.

6. Arbre de transmission de force selon la revendication 2, **caractérisé en ce que** la goupille conique (15) est munie sur son extrémité à diamètre effilé d'une tige filetée et le moyen de sécurité est formé d'un corps formant écrou, pouvant être vissé avec elle et prenant appui, au moins indirectement, sur la face intérieure du tronçon de manchon (12a).

7. Arbre de transmission de force selon la revendication 1, **caractérisé en ce que** le moyen de sécurité est une manchette fixée sur le tronçon de manchon (12d) ou l'extrémité de tube (11a).

8. Arbre de transmission de force selon la revendication 1 ou l'une des revendications suivantes, **caractérisé en ce que** la pièce de raccordement (12) présente, en agencement concentrique, deux tronçons de manchon (12a, 12d) entre lesquels est logée l'extrémité (11a) du tube (11).

9. Arbre de transmission de force selon la revendication 1 ou selon l'une des revendications suivantes, **caractérisé en ce que** la pièce de raccordement (12) présente un tronçon de manchon (12a) pénétrant dans l'extrémité (11a) du tube (11), tronçon de manchon qui, dans la zone d'agencement des goupilles coniques (15), présente un renforcement en matériau (12c), en particulier réalisé sous la forme d'une nervure intérieure (23) de pourtour.

10. Arbre de transmission de force selon la revendication 1 ou l'une des revendications suivantes, **caractérisé en ce que** les interstices de jointoiement (13 ; 13a) entre le tronçon de manchon (12a, 12d) et l'extrémité de tube (11a) sont réalisées au moins par zone pour recevoir de l'adhésif.

11. Arbre de transmission de force selon la revendication 1 ou l'une des revendications suivantes, **caractérisé en ce que** la goupille conique (15) est insérée, avec interposition d'un adhésif, dans les perçages (16, 17) coniques de l'extrémité de tube (11a) et du tronçon de manchon (12a, 12d).
